# EUROPEAN PATENT APPLICATION

(11) **EP 4 683 105 A1**
(43) Date of publication of application: **21.01.2026**
(21) Application number: 25768486.0
(22) Date of filing: 23.01.2025
(51) Int. Cl.: H01M 50/593, H01M 50/505, H01M 50/291, H01M 50/296, H01M 10/04

(54) **INTER-BUS BAR, PACK HOUSING COMPRISING SAME, BATTERY PACK COMPRISING SAME, AND MANUFACTURING METHOD THEREFOR**

(30) Priority: 08.03.2024 KR 20240033066
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/001315
(87) International publication number: WO 2025/187962

(57) **Abstract**

Disclosed are an inter-busbar including a conductive member configured to be electrically connected to a module terminal provided at a battery module, an insulating portion enclosing a remaining area of the conductive member excluding an area configured to be in contact with the module terminal, and a case allowing the insulating portion inserted thereinto, a pack housing including the same, a battery pack including the same, and a method of manufacturing the same.

## Description

### [Technical Field]

This application claims the benefit of priority to Korean Patent Application No. 10-2024-0033066 filed on March 8, 2024, the disclosure of which is incorporated herein by reference in its entirety.

The present invention relates to an inter-busbar, a pack housing including the same, a battery pack including the same, and a method of manufacturing the same, and more particularly to an inter-busbar that can be coupled to a pack housing, a pack housing including the same, a battery pack including the same, and a method of manufacturing the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

There are a lithium ion battery, a lithium polymer battery, a nickel cadmium battery, a nickel hydride battery, and a nickel zinc battery as secondary batteries that are widely used at present. The operating voltage of a unit secondary battery cell, i.e. a unit battery cell, is about 2.0 V to 5.0 V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities, and a battery pack is generally manufactured using at least one battery module by adding an additional component.

However, a lithium secondary battery is at risk of explosion due to overheating, and therefore ensuring safety thereof is a major challenge. Overheating may occur for various reasons, one of which is overcurrent flowing in the lithium secondary battery. The overcurrent causes the internal temperature of the secondary battery to rise rapidly due to heat generation, and the rapid increase in temperature causes thermal runaway, which may lead to explosion of the secondary battery.

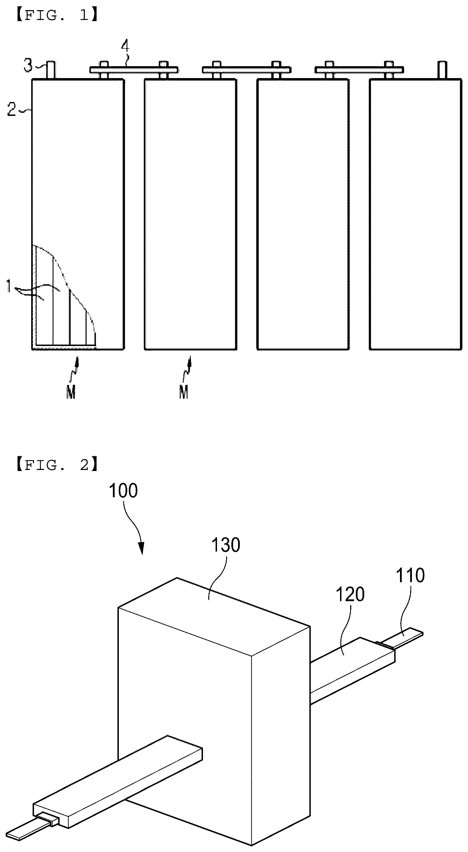

FIG. 1 is a schematic view of a battery pack having a conventional busbar applied thereto. As shown in FIG. 1, the battery pack may be configured such that a battery module M including a plurality of battery cells 1 is connected to an external terminal 3 of another battery module M adjacent thereto via an inter-busbar 4.

In this case, there is the problem that the remaining part of the inter-busbar 4, excluding the area of the inter-busbar in contact with the external terminal 3, is exposed to discharge generated during thermal runaway, which increases the probability of internal short circuit occurring.

### (Prior Art Document)

(Patent Document 1) Korean Patent Application Publication No. 10-2015-0028073

### [Disclosure]

### [Technical Problem]

The present invention has been made in view of the above problems, and it is an object of the present invention to provide an inter-busbar configured such that the remaining area of the inter-busbar, excluding the area of the inter-busbar in contact with an external terminal of a battery module, is not exposed to discharge, thereby reducing the probability of internal short circuit occurring, a pack housing including the same, a battery pack including the same, and a method of manufacturing the same.

### [Technical Solution]

As a technical means for achieving the above object, an inter-busbar according to an embodiment of the present invention includes a conductive member (110) configured to be electrically connected to a module terminal (310) provided at a battery module (300), an insulating portion (120) enclosing a remaining area of the conductive member (110) excluding an area configured to be in contact with the module terminal (310), and a case (130) allowing the insulating portion (120) inserted thereinto.

Also, in the inter-busbar according to the embodiment of the present invention, the conductive member (110) may have a shape of a straight bar.

Also, in the inter-busbar according to the embodiment of the present invention, the case (130) may include a through-hole (131) allowing the conductive member (110) and the insulating portion (120) to extend therethrough.

Also, in the inter-busbar according to the embodiment of the present invention, the conductive member (110) may be made of an electrically conductive material including a metal material.

Also, in the inter-busbar according to the embodiment of the present invention, an insulating material (111) may be applied to an outer surface of the remaining area of the conductive member (110).

Also, in the inter-busbar according to the embodiment of the present invention, the insulating portion (120) may be made of an electrically insulating material.

In addition, a pack housing including the inter-busbar according to the embodiment of the present invention includes an outer frame (210), a partition wall (220) provided in the outer frame (210), the partition wall being lattice-shaped and disposed to form a plurality of receiving recesses (230) each configured to receive the battery module (300), and the inter-busbar (100) seated on the partition wall (220).

Also, in the pack housing according to the embodiment of the present invention, the partition wall (220) may include a first partition wall (221) disposed in a first direction parallel to an axial direction in which the module terminal (310) of the battery module (300) is disposed and a second partition wall (222) disposed in a second direction perpendicular to the first direction.

Also, in the pack housing according to the embodiment of the present invention, the first partition wall (221) may be provided with a first seating recess (221a) allowing the inter-busbar (100) to be seated therein, and the first seating recess (221a) may be formed in the first partition wall (221) in the second direction.

Also, in the pack housing according to the embodiment of the present invention, the second partition wall (222) may be provided with a second seating recess (222a) allowing the inter-busbar (100) to be seated therein, and the second seating recess (222a) may be formed in the second partition wall (222) in the first direction.

In addition, a battery pack including the pack housing according to the embodiment of the present invention includes the pack housing (200) including the inter-busbar (100), the outer frame (210), and the partition wall (220) and a plurality of battery modules (300), each of the plurality of battery modules having the module terminal (310).

Also, in the battery pack according to the embodiment of the present invention, the inter-busbar (100) may be seated in the first seating recess (221a) thereby electrically connect the module terminals (310) of the battery modules (300) adjacent to each other in the second direction.

Also, in the battery pack according to the embodiment of the present invention, the inter-busbar (100) may be seated in the second seating recess (222a) thereby electrically connect the module terminals (310) of the battery modules (300) adjacent to each other in the first direction.

In addition, a method of manufacturing the battery pack according to the embodiment of the present invention includes (S1) receiving the plurality of battery modules (300) in the plurality of receiving recesses (230), (S2) seating a plurality of inter-busbars (100) in the first seating recess (221a) and/or the second seating recess (222a) thereby connecting the module terminals (310) provided at the battery modules (300) adjacent to each other, and (S3) bringing the module terminals (310) into electrical contact with the conductive member (11).

Also, the method of manufacturing the battery pack according to the embodiment of the present invention may further include adding an insulating material to an upper surface of the conductive member (110) after step (S3).

### [Advantageous Effects]

As is apparent from the above description, in an inter-busbar according to the present invention, a pack housing including the same, a battery pack including the same, and a method of manufacturing the same, the inter-busbar, excluding the part of the inter-busbar electrically connected to a module terminal provided at the battery module, is wrapped with an insulating member, whereby it is possible to prevent the occurrence of internal short circuit even if discharge generated during thermal runaway of a cell scatters and accumulates on the inter-busbar.

Also, in the inter-busbar according to the present invention, the pack housing including the same, the battery pack including the same, and the method of manufacturing the same, a recess configured to allow the inter-busbar to be seated therein is formed in a partition wall of the pack housing, whereby it is possible to simplify the method of manufacturing the battery pack.

### [Description of Drawings]

FIG. 1 is a schematic view of a battery pack having a conventional busbar applied thereto.
FIG. 2 is a perspective view of an inter-busbar according to an embodiment of the present invention.
FIG. 3 is an exploded perspective view of the inter-busbar according to the embodiment of the present invention.
FIG. 4 is a conceptual view of a battery pack including a pack housing according to an embodiment of the present invention.
FIG. 5 is a view illustrating the inter-busbar being seated on a first partition wall of a battery pack according to an embodiment of the present invention.
FIG. 6 is a view illustrating the state in which the inter-busbar is seated on the first partition wall of the battery pack according to the embodiment of the present invention.
FIG. 7 is a view illustrating the inter-busbar being seated on a second partition wall of the battery pack according to the embodiment of the present invention.
FIG. 8 is a view illustrating the state in which the inter-busbar is seated on the second partition wall of the battery pack according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an inter-busbar according to the present invention will be described.

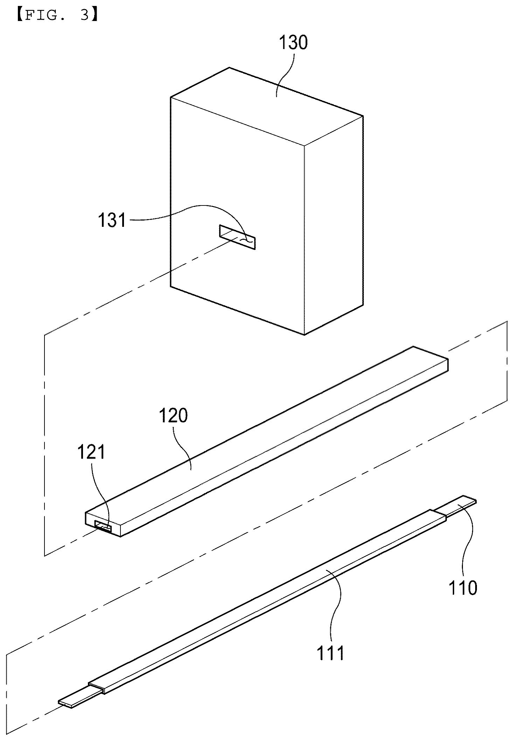

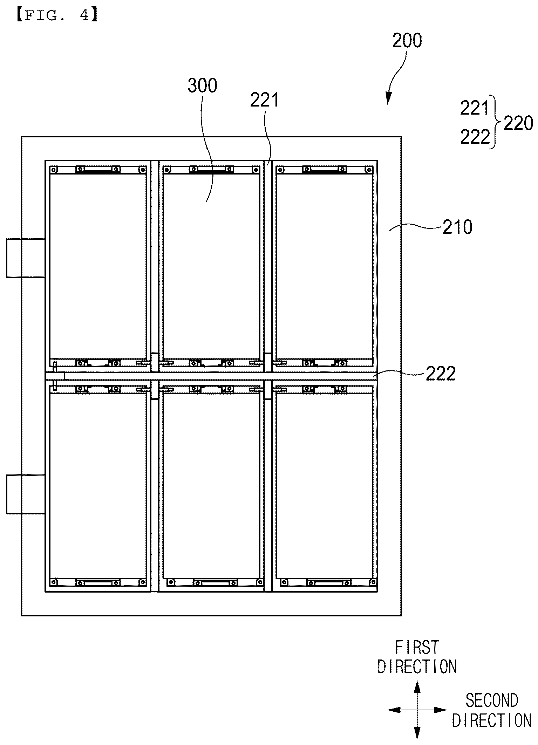

FIG. 2 is a perspective view of an inter-busbar according to an embodiment of the present invention, FIG. 3 is an exploded perspective view of the inter-busbar according to the embodiment of the present invention, and FIG. 4 is a conceptual view of a battery pack including a pack housing according to an embodiment of the present invention.

Referring to FIGs. 2 to 4, the inter-busbar 100 includes a conductive member 110, an insulating portion 120, and a case 130.

First, the conductive member 110 may be configured to be electrically connected to module terminals 310 provided at battery modules 300. For example, both ends of the conductive member 110 may contact the module terminals 310, whereby the conductive member 110 may be electrically connected to the module terminals 310.

The conductive member 110 may be made of an electrically conductive material including a metal material. For example, the conductive member 110 may be made of a metal plate. More specifically, the conductive member 110 may be made of copper, aluminum, nickel, gold, silver, or a combination thereof.

In addition, an insulating material 111 may be applied to the remaining area of the outer surface of the conductive member 110 excluding both ends, which are the areas in contact with the module terminals 310.

The insulating material 111 may be an external insulating material, which is a component constituting the inter-busbar, and may prevent electrification during subsequent battery pack manufacturing. For example, the insulating material 111 may be at least one of polybutylene terephthalate (PBT), plastic, an inorganic oxide, or a non-conductive metal.

The conductive member 110 may be formed in the shape of a straight bar. Accordingly, the inter-busbar 100 may electrically connect module terminals 310 of battery modules 300 that are adjacent to each other.

The insulating portion 120 may be configured to enclose the remaining area of the conductive member 110 excluding the areas in contact with the module terminals 310. That is, the insulating portion 120 may be configured to enclose the area of the conductive member 110 to which the insulating material 111 is applied.

The insulating portion 120 may be made of an electrically insulating material. For example, the insulating portion may be made of at least one of a plastic, an inorganic oxide, and a non-conductive metal.

In addition, the insulating portion 120 may have an insertion hole 121, into which the conductive member 110 is inserted, formed therein, and the conductive member 110 may be inserted into the insertion hole 121 to minimize the area of exposure to discharge.

The insulating portion 120 may be configured to enclose the outer surface of the conductive member 110 excluding both ends of the conductive member 110, whereby it is possible to reduce the probability of the conductive member 110 being in contact with spark particles compared to the prior art.

The case 130 may be configured to allow the insulating portion 120 to be inserted therethrough. The case 130 may be provided with a through-hole 131, through which the conductive member 110 and the insulating portion 120 are inserted, such that the conductive member 110 inserted into the insertion hole 121 of the insulating portion 120 can be inserted through the through-hole 131 and be coupled to the case 130.

For example, the through-hole 131 may be formed such that the conductive member 110 and the insulating portion 120 extend through the center of a side surface of the case 130.

In addition, the case 130 may be made of the same material as a partition wall 220 described later or an injection molded material represented by heat-resistant plastic.

Hereinafter, a pack housing and a battery pack including the inter-busbar according to the present invention will be described.

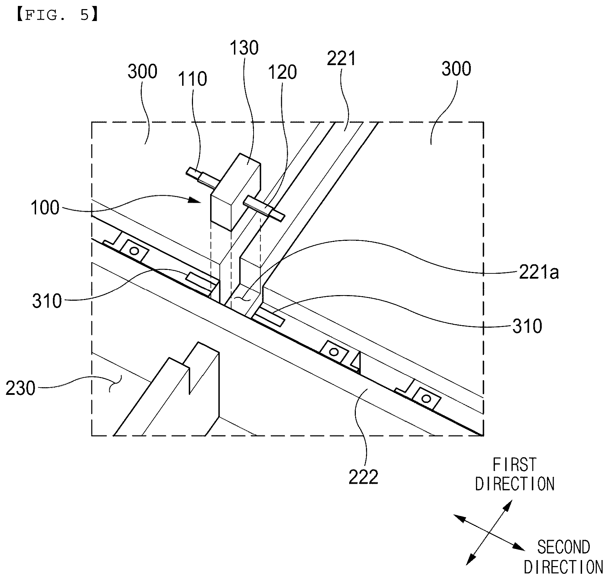

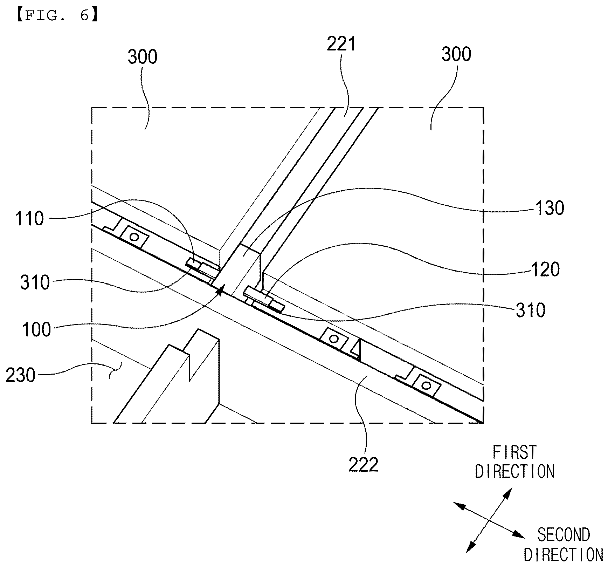

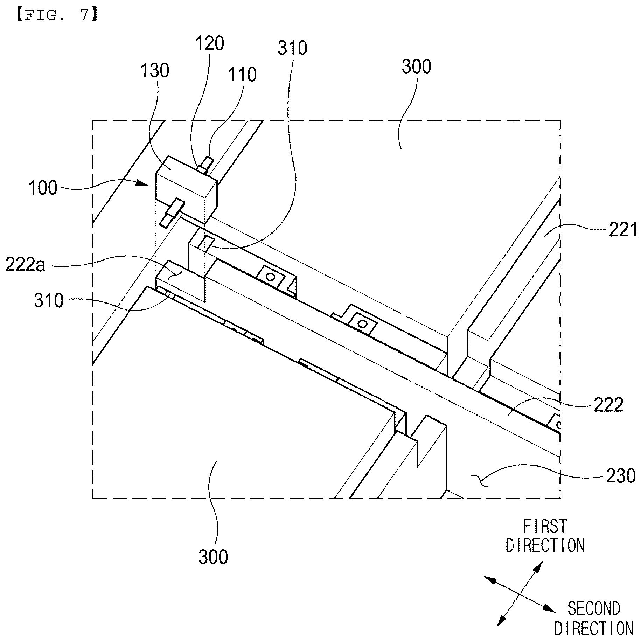

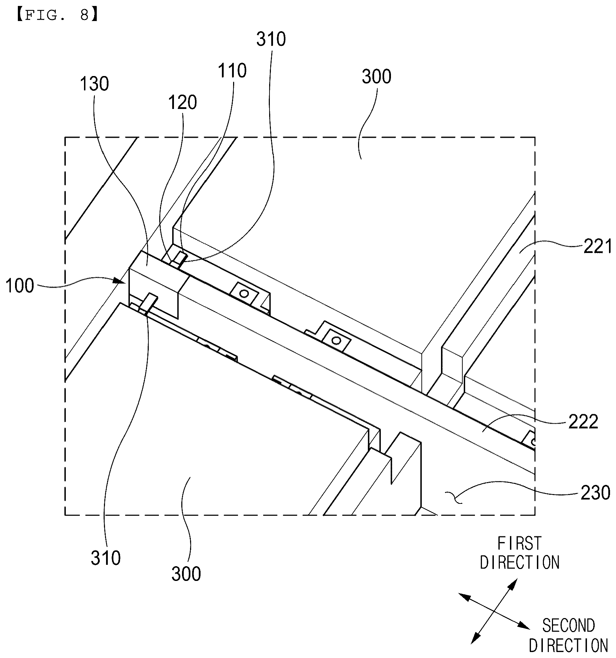

FIG. 5 is a view illustrating the inter-busbar being seated on a first partition wall of a battery pack according to an embodiment of the present invention, and FIG. 6 is a view illustrating the state in which the inter-busbar is seated on the first partition wall of the battery pack according to the embodiment of the present invention. In addition, FIG. 7 is a view illustrating the inter-busbar being seated on a second partition wall of the battery pack according to the embodiment of the present invention, and FIG. 8 is a view illustrating the state in which the inter-busbar is seated on the second partition wall of the battery pack according to the embodiment of the present invention.

Referring to FIGs. 2 to 8, the pack housing 200 includes an outer frame 210, a partition wall 220, and an inter-busbar 100. In addition, the pack housing 200 may include an upper case (not shown) and a lower case (not shown).

First, the outer frame 210 may have an empty space formed therein, and a plurality of battery modules 300 and the partition wall 220 may be received in the empty space. For example, the outer frame 210 may be configured in the form of a box when coupled to the upper case (not shown) and the lower case (not shown).

The partition wall 220 may include a first partition wall 221 and a second partition wall 222. The partition wall 220 may be provided in the outer frame 210, and may be disposed in the form of a lattice to form a plurality of receiving recesses 230 configured to receive the battery modules 300.

The first partition wall 221 may be disposed in a first direction parallel to an axial direction (12 o'clock to 6 o'clock in FIG. 4) in which module terminals 310 of the battery modules 300 are disposed. In addition, the second partition wall 222 may be disposed in a second direction, which is perpendicular to the first direction.

For example, the second partition wall 222 may be disposed in the middle of the outer frame 210 in the first direction, and the first partition wall 221 may be disposed spaced apart from the outer frame 210 so as to correspond to the overall width of the battery module 300.

The distance between the outer frame 210 and the second partition wall 222 corresponds to the overall length of the battery module 300, and the distance between the outer frame 210 and the first partition wall 221 or between the first partition wall 221 and the second partition wall 222 may correspond to the overall width of the battery module 300.

As the first partition wall 221 and the second partition wall 222 are disposed as described above, the outer frame 210 and the partition wall 220 may form a plurality of receiving recesses 230 configured to receive the battery modules 300. The size of each of the plurality of receiving recesses 230 may correspond to the size of the battery module 300.

Meanwhile, the inter-busbar 100 may be seated on the partition wall 220.

Referring first to FIGs. 5 and 6, a first seating recess 221a may be formed in the first partition wall 221, and the inter-busbar 100 may be seated in the first seating recess 221a.

More specifically, the first seating recess 221a may be formed in the first partition wall 221 in a shape in which a part of the first partition wall is cut out in the second direction from the middle of the first partition wall that the second partition wall 222 crosses. Of course, the first seating recess 221a may be formed not by actually cutting out a part of the first partition wall 221 but by shaping the first partition wall 221 into a shape in which the first seating recess 221a is formed therein during the manufacture of the first partition wall.

The first seating recess 221a may be formed at the position corresponding to the position where the module terminals 310 of the battery modules 300 received in the plurality of receiving recesses 230 are disposed.

The inter-busbar 100 may have a shape corresponding to the shape of the first seating recess 221a, and the first seating recess 221a of the first partition wall 221 and the case 130 of the inter-busbar 100 may match each other.

In addition, for example, the inter-busbar 100 may be provided on a lower surface thereof with a protrusion (not shown) protruding downward from the lower surface thereof so as to be coupled to the partition wall 220, and the first seating recess 221a may be provided with a coupling recess (not shown) configured to be coupled to the protrusion (not shown).

In addition, referring to FIGs. 7 and 8, a second seating recess 222a may be formed in the second partition wall 222, and the inter-busbar 100 may be seated in the second seating recess 222a.

More specifically, the second seating recess 222a may be formed in one side of the second partition wall 222 in contact with the outer frame 210 or the other side of the second partition wall in a shape in which a part of the second partition wall is cut out in the first direction. Of course, the second seating recess 222a may be formed not by actually cutting out a part of the second partition wall 222 but by shaping the second partition wall 222 into a shape in which the second seating recess 222a is formed therein during the manufacture of the second partition wall.

The second seating recess 222a may be formed at the position corresponding to the position where the module terminals 310 of the battery modules 300 received in the plurality of receiving recesses 230 are disposed.

The inter-busbar 100 may have a shape corresponding to the shape of the second seating recess 222a, and the second seating recess 222a of the second partition wall 222 and the case 130 of the inter-busbar 100 may match each other.

In addition, for example, the inter-busbar 100 may be provided on the lower surface thereof with a protrusion (not shown), and the second seating recess 222a may be provided with a coupling recess (not shown) configured to be coupled to the protrusion (not shown).

Referring to FIGs. 4 to 8, the first partition wall 221 and the second partition wall 222 may be interposed between the battery modules 300, and may be provided in a shape and a material capable of blocking or reducing the transfer of heat and/or flames between the battery modules 300. For example, each of the first partition wall 221 and the second partition wall 222 may be made of a material including aluminum.

In addition, the case 130 of the inter-busbar 100, which is seated on the first partition wall 221 and the second partition wall 222, may also be provided in a shape and a material capable of blocking or reducing the transfer of heat and/or flames between the battery modules 300.

The inter-busbar 100 may be seated on the first partition wall 221 or the second partition wall 222 to prevent heat propagation between different battery modules 300 while electrically connecting neighboring battery modules 300 to each other.

Meanwhile, referring to FIGs. 2 to 8, the battery pack according to the embodiment of the present invention includes a pack housing 200 and a battery module 300.

As described above, the pack housing 200 includes an inter-busbar 100, an outer frame 210, and a partition wall 220. The pack housing 200 including the inter-busbar 100 is the same as described above, and therefore a more detailed description thereof will be omitted.

The battery module 300 may include a cell assembly (not shown), a module case (not shown), and a module terminal 310.

First, the cell assembly (not shown) may include a plurality of battery cells. The battery cell may be a pouch-shaped secondary battery including an electrode assembly, an electrode lead, and a battery case.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The battery case, which receives the electrode assembly, is made of a laminate sheet including an outer covering layer, a metal layer, and an inner covering layer, and has a receiving portion formed therein.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In addition, the module case (not shown) may receive the cell assembly (not shown) in an inner space defined therein.

The battery module 300 according to the present invention is not particularly restricted in shape or configuration, and a variety of battery modules 300 may be provided.

The battery module 300 includes a module terminal 310, and may be provided in plural. The plurality of battery modules 300 may be received in the plurality of receiving recesses 230 of the pack housing 200, respectively.

At this time, the plurality of battery modules 300 may be disposed such that the module terminals 310 face the second partition wall 222.

Referring to FIGs. 5 and 6, module terminals 310 of battery modules 300 adjacent to each other in the second direction may be seated in the first seating recess 221a of the inter-busbar 100 so as to be electrically connected to each other.

In addition, referring to FIGs. 7 and 8, module terminals 310 of battery modules 300 adjacent to each other in the first direction may be seated in the second seating recess 222a of the inter-busbar 100 so as to be electrically connected to each other.

Next, a method of manufacturing a battery pack according to an embodiment of the present invention will be described with reference to FIGs. 2 to 8.

The method of manufacturing the battery pack according to the present invention includes (S1) receiving a plurality of battery modules 300 in a plurality of receiving recesses 230, (S2) seating a plurality of inter-busbars 100 in a first seating recess 221a and/or a second seating recess 222a so as to connect module terminals 310 provided at battery modules 300 adjacent to each other, and (S3) bringing the module terminals 310 into electrical contact with a conductive member 110.

In step (S2), the inter-busbar 100 may be seated in the first seating recess 221a so as to electrically connect module terminals 310 of battery modules 300 adjacent to each other in the second direction. Also, in step (S2), the inter-busbar 100 may be seated in the second seating recess 222a so as to electrically connect module terminals 310 of battery modules 300 adjacent to each other in the first direction.

In step (S3), the conductive member 110 may be brought into electrical contact with the module terminals 310 provided at the battery modules 300 adjacent to each other, whereby the battery modules 300 adjacent to each other may be electrically connected to each other.

In addition, the method of manufacturing the battery pack according to the present invention may include adding an insulating material to an upper surface of the conductive member 110 after step (S3). Here, the insulating material may be heat-resistant silicone or insulating tape.

For example, the insulating material may be added to the surface of the conductive member 110 opposite the surface in electrical contact with the module terminal 310 to secure contact between the conductive member 110 and the module terminal 310. In addition, the insulating material may be added to the surface of the conductive member 110 opposite the surface in electrical contact with the module terminal 310 to prevent the remainder of the conductive member 110 excluding the surface of the conductive member 110 in contact with the module terminal 310 from being exposed to discharge.

In the method of manufacturing the battery pack according to the present invention, the inter-busbar 100 is seated in the first seating recess 221a or the second seating recess 222a such that the conductive member 110 is electrically connected to the module terminals 310 provided at the battery modules 300 adjacent to each other, whereby it is possible to realize a simpler process than a conventional method of fastening the inter-busbar to the module terminals using a bolt.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

| | | | |
|---|---|---|---|
| 100: | Inter-busbar | | |
| 110: | Conductive member | 111: | Insulating material |
| 120: | Insulating portion | 121: | Insertion hole |
| 130: | Case | 131: | Through-hole |
| 200: | Pack housing | | |
| 210: | Outer frame | | |
| 220: | Partition wall | | |
| 221: | First partition wall | 221a: | First seating recess |
| 222: | Second partition wall | 222a: | Second seating recess |
| 230: | Receiving recess | | |
| 300: | Battery module | | |
| 310: | Module terminal | | |

## Claims

1. An inter-busbar, comprising:
a conductive member configured to be electrically connected to a module terminal provided at a battery module;
an insulating portion enclosing a remaining area of the conductive member excluding an area configured to be in contact with the module terminal; and
a case allowing the insulating portion inserted thereinto.

2. The inter-busbar according to claim 1, wherein the conductive member has a shape of a straight bar.

3. The inter-busbar according to claim 1, wherein the case comprises a through-hole allowing the conductive member and the insulating portion to extend therethrough.

4. The inter-busbar according to claim 1, wherein the conductive member is made of an electrically conductive material comprising a metal material.

5. The inter-busbar according to claim 4, wherein an insulating material is applied to an outer surface of the remaining area of the conductive member.

6. The inter-busbar according to claim 1, wherein the insulating portion is made of an electrically insulating material.

7. A pack housing comprising the inter-busbar according to any one of claims 1 to 6, the pack housing comprising:
an outer frame;
a partition wall provided in the outer frame, the partition wall being lattice-shaped and disposed to form a plurality of receiving recesses each configured to receive the battery module; and
the inter-busbar seated on the partition wall.

8. The pack housing according to claim 7, wherein the partition wall comprises:
a first partition wall disposed in a first direction parallel to an axial direction in which the module terminal of the battery module is disposed; and
a second partition wall disposed in a second direction perpendicular to the first direction.

9. The pack housing according to claim 8, wherein
the first partition wall is provided with a first seating recess allowing the inter-busbar to be seated therein, and
the first seating recess is formed in the first partition wall in the second direction.

10. The pack housing according to claim 8, wherein
the second partition wall is provided with a second seating recess allowing the inter-busbar to be seated therein, and
the second seating recess is formed in the second partition wall in the first direction.

11. A battery pack comprising the pack housing according to any one of claims 7 to 10, wherein
the pack housing comprising the inter-busbar, the outer frame, and the partition wall; and
a plurality of battery modules, each of the plurality of battery modules having the module terminal.

12. The battery pack according to claim 11, wherein the inter-busbar is seated in the first seating recess thereby electrically connect the module terminals of the battery modules adjacent to each other in the second direction.

13. The battery pack according to claim 11, wherein the inter-busbar is seated in the second seating recess thereby electrically connect the module terminals of the battery modules adjacent to each other in the first direction.

14. A method of manufacturing the battery pack according to any one of claims 11 to 13, the method comprising:
(S1) receiving the plurality of battery modules in the plurality of receiving recesses;
(S2) seating a plurality of inter-busbars in the first seating recess and/or the second seating recess thereby connecting the module terminals provided at the battery modules adjacent to each other; and
(S3) bringing the module terminals into electrical contact with the conductive member.

15. The method according to claim 14, further comprising adding an insulating material to an upper surface of the conductive member after step (S3).
